# EUROPEAN PATENT APPLICATION

(11) **EP 4 498 467 A1**
(43) Date of publication of application: **29.01.2025**
(21) Application number: 24189934.3
(22) Date of filing: 22.07.2024
(51) Int. Cl.: H01M 10/0567, H01M 4/525, H01M 4/587, H01M 10/0525, H01M 10/0568, H01M 10/0569

(54) **RECHARGEABLE LITHIUM BATTERY**

(30) Priority: 27.07.2023 KR 20230098393
(71) Applicant: SAMSUNG SDI CO., LTD., Giheung-gu Yongin-si, Gyeonggi-do 17084 (KR)
(72) Inventor: Kim, Sanghyung, 17084 Yongin-si, Gyeonggi-do (KR); Bae, Tae Hyon, 17084 Yongin-si, Gyeonggi-do (KR); Lee, Harim, 17084 Yongin-si, Gyeonggi-do (KR); Son, Seunghyeon, 17084 Yongin-si, Gyeonggi-do (KR); Shin, Youngkyeong, 17084 Yongin-si, Gyeonggi-do (KR); Sanghoon, Kim, 17084 Yongin-si, Gyeonggi-do (KR); Yu, Arum, 17084 Yongin-si, Gyeonggi-do (KR)
(74) Representative: Gulde & Partner

(57) **Abstract**

A rechargeable lithium battery including a positive electrode including a positive electrode active material, a negative electrode including a negative electrode active material, and an electrolyte is provided. An active mass density of the negative electrode is greater than or equal to 1.7 g/cc, and the electrolyte includes a lithium salt, a nonaqueous organic solvent, a first additive represented by Chemical Formula 1, and a second additive represented by Chemical Formula 2.

## Description

### BACKGROUND

### 1. Field

According to one or more embodiments, the present disclosure relates to rechargeable lithium battery.

### 2.) Description of the Related Art

Recently, with the rapid spread of electronic devices that utilize rechargeable lithium batteries, such as mobile phones, laptop computers, electric vehicles, and/or the like, the demand for rechargeable batteries with relatively high energy density and relatively high capacity is rapidly increasing. Accordingly, research and development to improve the performance of rechargeable lithium batteries is actively underway or being pursed.

A rechargeable lithium battery includes a positive electrode and a negative electrode including an active material capable of intercalating and deintercalating lithium ions, and an electrolyte. Electrical energy is produced through oxidation and reduction reactions if lithium ions are intercalated/deintercalated to/from the positive electrode and negative electrode.

One of the recent developmental advances in technology for rechargeable lithium batteries is to increase the energy density of the negative electrode. However, if the energy density of the negative electrode is increased, void volumes may decrease, and the amount of electrolyte impregnated into the negative electrode increases, thereby possibly causing an increase in a thickness of the battery and a decrease of cycle-life.

### SUMMARY

The invention is defined by the appended claims. The description that follows is subjected to this limitation. Any disclosure lying outside the scope of said claims is only intended for illustrative as well as comparative purposes. One or more aspects are directed toward a rechargeable lithium battery that increases the active mass density of the negative electrode and suppresses an increase in its thickness and a decrease in cycle-life of the battery.

Additional aspects will be set forth in part in the description which follows and, in part, will be apparent from the description, or may be learned by practice of the presented embodiments of the disclosure.

According to one or more embodiments a rechargeable lithium battery includes a positive electrode including a positive electrode active material; a negative electrode including a negative electrode active material; and an electrolyte. An active mass density of the negative electrode is greater than or equal to 1.7 gram per cubic centimeter (g/cc), and the electrolyte includes a lithium salt; a non-aqueous organic solvent; a first additive represented by Chemical Formula 1; and a second additive represented by Chemical Formula 2:

Chemical Formula 1 R¹-O-R ²

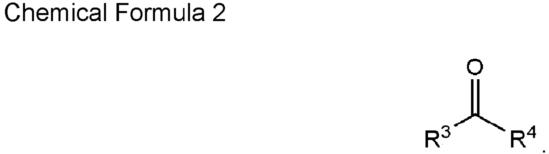

The rechargeable lithium battery according to one or more embodiments may increase the active mass density of the negative electrode while suppressing or reducing an increase in battery thickness and a decrease in cycle-life.

### BRIEF DESCRIPTION OF THE DRAWINGS

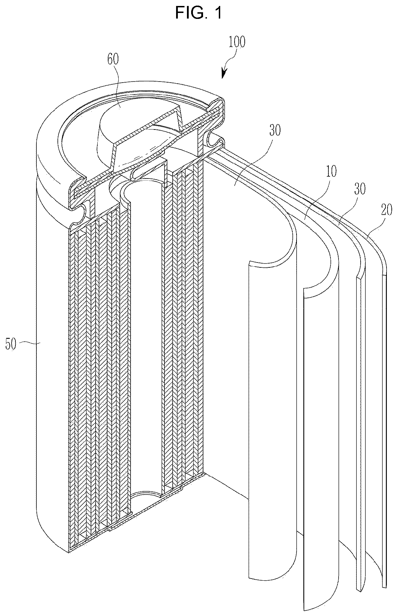

FIGs. 1-4 are schematic views showing rechargeable lithium batteries according to one or more embodiments.

### DETAILED DESCRIPTION

Hereinafter, embodiments of disclosure will be described in more detail with reference to the attached drawings, so that those of ordinary skill in the art can easily implement them. Examples of which are illustrated in the accompanying drawings, wherein like reference numerals refer to like elements throughout, and duplicative descriptions thereof may not be provided. Accordingly, the embodiments are described, by referring to the drawings, to explain aspects of the present description. However, these embodiments are merely examples, and the present disclosure is not limited thereto. Rather the present disclosure is defined by the scope of claims.

In the drawings, the thickness of layers, films, panels, regions, and/or the like, are exaggerated for clarity wherein like reference numerals designate like elements, and duplicative descriptions thereof may not be provided throughout the specification. As utilized herein, if specific definition is not otherwise provided, it will be understood that if an element such as a layer, film, region, or substrate is referred to as being "on" another element, it can be directly on the other element or intervening elements may also be present.

In one or more embodiments, the term "layer" herein includes not only a shape formed on the whole surface if viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, "a combination thereof" may refer to a mixture of constituents, a stack, a composite, a copolymer, an alloy, a blend, and a reaction product.

Herein, it should be understood that terms such as "comprises," "comprise," "comprising," "includes," "including," "include," "having," "has," and/or "have" are intended to designate the presence of an embodied aspect, number, operation, element, and/or any suitable combination thereof, but it does not preclude the possibility of the presence or addition of one or more other feature, number, operation, element, and/or any suitable combination thereof.

As utilized herein, the term "and/or" includes any, and all, combinations of one or more of the associated listed items. Expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

"Metal" is interpreted as a concept including ordinary metals, transition metals and metalloids (semi-metals).

As utilized herein, "substituted" refers to replacement of at least one hydrogen of a compound by a substituent of a halogen atom (F, Cl, Br, or I), a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and/or any suitable combination thereof.

Herein, for example, C1 to C20 refers to having 1 to 20 carbon atoms.

As utilized herein, the "active mass density of the negative electrode" is a value calculated by dividing a weight of the components (active material, conductive material, binder, and/or the like). excluding the current collector in the negative electrode by a volume thereof.

As utilized herein, if a definition is not otherwise provided, in chemical formulae, hydrogen is bonded at the position if a chemical bond is not drawn where supposed to be given.

As utilized herein, "fluoroalkyl group" refers to an alkyl group in which some or all of the hydrogen atoms are replaced by fluorine atoms.

As utilized herein, "perfluoroalkyl group" refers to an alkyl group in which all hydrogen atoms are replaced by fluorine atoms.

### Rechargeable Lithium Battery

A rechargeable lithium battery includes a positive electrode including a positive electrode active material; a negative electrode including a negative electrode active material; and an electrolyte. An active mass density of the negative electrode is greater than or equal to 1.7 g/cc, and the electrolyte includes a lithium salt; a non-aqueous organic solvent; a first additive represented by Chemical Formula 1; and a second additive represented by Chemical Formula 2:

Chemical Formula 1 R¹-O - R²

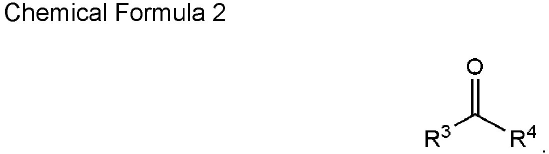

The first additive and second additive may each function as a surfactant having both hydrophilic and hydrophobic groups in one molecule.

The first additive includes an oxygen atom (e.g., ether group) at the center and a fluorine atom or a C1 to C10 fluoroalkyl group on both sides (e.g., opposite sides) of the oxygen atom. Herein, the ether group is a hydrophilic group, and the fluorine atom or C1 to C10 fluoroalkyl group is a hydrophobic group.

In one or more embodiments, the second additive includes a ketone group at the center and fluorine atoms or fluoroalkyl groups of 1 to 10 carbon atoms on both sides (e.g., opposite sides). Herein, the ketone group is a hydrophilic group, and the fluorine atom or fluoroalkyl group having 1 to 10 carbon atoms is a hydrophobic group.

Accordingly, if an electrolyte including the first additive and the second additive is utilized, wettability of the positive electrode and negative electrode is improved, lithium cations (Li⁺) are uniformly (substantially uniformly) formed at the interface between the positive electrode and the electrolyte, and a stable solid electrolyte interface (SEI) film is formed at the interface between the negative electrode and the electrolyte, suppressing or reducing the precipitation of lithium dendrites.

Therefore, if an electrolyte including both (e.g., simultaneously) the first additive and the second additive is utilized, while increasing the active mass density of the negative electrode to 1.7 g/cc or more, the increase in battery thickness and decrease in cycle-life may be suppressed or reduced.

Hereinafter, a rechargeable lithium battery according to one or more embodiments will be described in more detail.

### Active Mass Density of Negative Electrode

Generally suitable rechargeable lithium batteries utilize a negative electrode with an active mass density of less than 1.7 g/cc, but a rechargeable lithium battery according to one or more embodiments uses a negative electrode with an active mass density (e.g., a mixture density or an active mass density of a mixture) of greater than or equal to 1.7 g/cc.

The upper limit for the active mass density of the negative electrode is not particularly limited, but may be less than or equal to 2.0 g/cc, less than or equal to 1.9 g/cc, or less than or equal to 1.8 g/cc.

### Charge Upper Limit Voltage

In the rechargeable lithium battery according to one or more embodiments, by utilizing an electrolyte including both the first additive and the second additive, an increase in the thickness and a decrease in the cycle-life of the battery can be suppressed or reduced even if the negative electrode is increased in active mass density.

For example, the rechargeable lithium battery may have an upper charge limit voltage of greater than or equal to 4.5 V.

### First Additive

In Chemical Formula 1, R¹ and R² are each independently a fluorine atom or a C1 to C10 fluoroalkyl group.

For example, R¹ may be a fluoroalkyl group having 2 carbon atoms.

Additionally, R² may be a fluoroalkyl group having 3 carbon atoms.

The first additive may be represented by Chemical Formula 1-1:

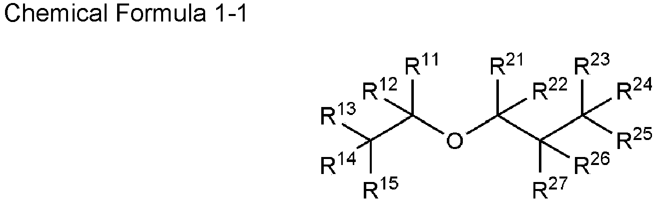

In Chemical Formula 1-1, R¹¹ to R¹⁵ are each independently a hydrogen atom or a fluorine atom, provided that at least one of (e.g., one or more selected from among) R¹¹ to R¹⁵ is a fluorine atom; and R²¹ to R²⁷ are each independently a hydrogen atom or a fluorine atom, provided that at least one of (e.g., one or more selected from among) R²¹ to R²⁷ is a fluorine atom.

Representative examples of the first additive are as follows:

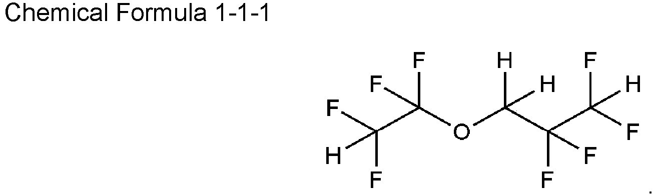

### Second Additive

In Chemical Formula 2, R³ and R⁴ are each independently a fluorine atom, or a C1 to C10 fluoroalkyl group.

For example, R³ may be a fluoroalkyl group or a perfluoroalkyl group having 2 carbon atoms.

Additionally, R⁴ may be a fluoroalkyl group or a perfluoroalkyl group having 3 carbon atoms.

The second additive may be represented by Chemical Formula 2-1:

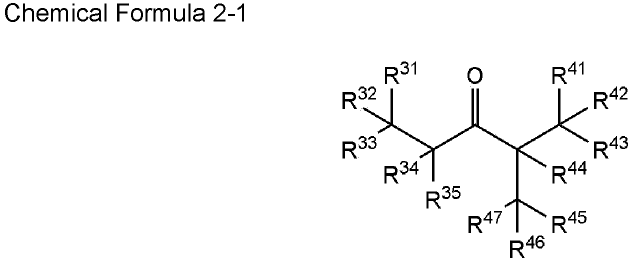

In Chemical Formula 2-1, R³¹ to R³⁵ are each independently a hydrogen atom or a fluorine atom, provided that at least one of (e.g., one or more selected from among) R³¹ to R³⁵ is a fluorine atom; and R⁴¹ to R⁴⁷ are each independently a hydrogen atom or a fluorine atom, provided that at least one of (e.g., one or more selected from among) R⁴¹ to R⁴⁷ is a fluorine atom.

Representative examples of the second additive are as follows:

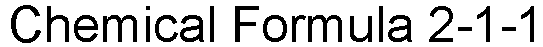

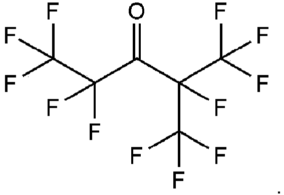

### Contents of First Additive and Second Additive

The first additive may be included in an amount of 1 to 20 wt%, 1 to 15 wt%, or 1 to 10 wt% based on a total amount of the electrolyte.

If the first additive is included in excess of the described range, viscosity of the electrolyte including the first additive may increase excessively (or substantially), and wettability of the positive electrode and the negative electrode may actually decrease. In contrast, if the content of the first additive is included in an amount less than (e.g., small amount below) the described range, the aspect as a surfactant may be minimal.

The second additive may be included in an amount of 1 to 10 wt%, 1 to 7 wt%, or 1 to 5 wt% based on a total amount of the electrolyte.

If the second additive is included in excess of the described range, viscosity of the electrolyte including the second additive may increase excessively (or substantially), and wettability of the positive electrode and negative electrode may actually decrease. In contrast, if the content of the second additive is included in an amount less than (e.g., small amount below) the described range, the aspect as a surfactant may be minimal.

A weight ratio of the first additive to the second additive may be 120:1 to 2:1, 15:1 to 2:1, or 10:1 to 2:1.

Within this range, the aspects of the first additive and the second additive may facilitate each other (e.g., be harmonized or synergized).

### Non-aqueous Organic Solvent

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, propyl propionate, decanolide, mevalonolactone, valerolactone, and caprolactone.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1 ,4-dioxolane, sulfolanes, and/or the like.

The non-aqueous organic solvent may be utilized alone or in combination of two or more.

For example, the non-aqueous organic solvent may include a carbonate-based solvent and a propionate-based solvent.

The total propionate-based solvent may be included in an amount of greater than or equal to 70 volume% based on a total amount of the non-aqueous organic solvent. In this case, relatively high-voltage and/or relatively high-temperature characteristics of the rechargeable lithium battery may be improved.

In some embodiments, the non-aqueous organic solvent may be a mixed solvent of ethylene carbonate (EC), propylene carbonate (PC), ethyl propionate (EP), and propyl propionate (PP).

### Lithium Salt

The lithium salt dissolved in the organic solvent supplies lithium ions in a battery, enables the general operation of a rechargeable lithium battery, and improves transportation of the lithium ions between positive and negative electrodes.

LiPF₆ may be utilized as the lithium salt.

A concentration of the lithium salt may be 0.1 M to 2.0 M.

### Positive Electrode Active Material

The positive electrode active material may be a compound (lithiated intercalation compound) capable of intercalating and deintercallating lithium. For example, one or more types (kinds) of composite oxides of lithium and a metal of cobalt, manganese, nickel, and/or combination thereof may be utilized.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, and/or a combination thereof.

As an example, a compound represented by any of the following chemical formulas may be utilized as the positive electrode active material. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the described chemical formulas, A is Ni, Co, Mn, and/or a combination thereof; X is Al, Ni, Co, Mn, Cr, Fe, Mg, Sr, V, a rare earth element, and/or a combination thereof; D is O, F, S, P, and/or a combination thereof; G is Al, Cr, Mn, Fe, Mg, La, Ce, Sr, V, and/or a combination thereof; and L¹ is Mn, Al, and/or a combination thereof.

As an example, the positive electrode active material may have a nickel content of greater than or equal to 80 mol%, greater than or equal to 85 mol%, greater than or equal to 90 mol%, greater than or equal to 91 mol%, or greater than or equal to 94 mol% based on 100 mol% of metals excluding lithium in the lithium transition metal composite oxide. and may be a relatively high nickel-based positive electrode active material of less than or equal to 99 mol%. The relatively high-nickel-based positive electrode active materials can achieve relatively high capacity and can be applied to relatively high-capacity, relatively high-density rechargeable lithium batteries.

The positive electrode active material may be, for example, lithium nickel-based oxide represented by Chemical Formula 11, lithium cobalt-based oxide represented by Chemical Formula 12, a lithium iron phosphate-based compound represented by Chemical Formula 13, and cobalt-free lithium nickel manganese-based oxide represented by Chemical Formula 14, and/or a combination thereof.

Chemical Formula 11 Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may each independently be one or more elements of Al, B, Ba, Ca, Ce, Co, Cr, Cu, Fe, Mg, Mn, Mo, Nb, Si, Sn, Sr, Ti, V, W, and Zr, and X is one or more elements of F, P, and S.

In Chemical Formula 1, 0.6≤x1≤1, 0≤y1≤0.4, and 0≤z1≤0.4, or 0.8≤x1≤1, 0≤y1≤0.2, and 0≤z1≤0.2.

Chemical Formula 12 Liₐ₂COₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is one or more elements of Al, B, Ba, Ca, Ce, Cr, Cu, Fe, Mg, Mn, Mo, Ni, Se, Si, Sn, Sr, Ti, V, W, Y, Zn, and Zr, and X is one or more elements of F, P, and S.

Chemical Formula 13 Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more elements selected from among Al, B, Ba, Ca, Ce, Co, Cr, Cu, Mg, Mn, Mo, Ni, Se, Si, Sn, Sr, Ti, V, W, Y, Zn, and Zr, and X is one or more elements selected from among F, P, and S.

Chemical Formula 14 Liₐ₄Niₓ₄MH_{y4}M³_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, and 0≤b4≤0.1 M⁵ is one or more elements selected from among Al, B, Ba, Ca, Ce, Cr, Fe, Mg, Mo, Nb, Si, Sn, Sr, Ti, V, W, and Zr, and X is one or more elements selected from among F, P, and S.

In particular, the electrolyte of the described embodiment can significantly improve relatively high-voltage and/or relatively high-temperature characteristics of a battery utilizing the lithium cobalt-based oxide represented by Chemical Formula 12.

### Positive Electrode

The positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can function as a sacrificial positive electrode.

A content of the positive electrode active material may be 90 wt% to 99.5 wt%, and a content of the binder and the conductive material may be 0.5 wt% to 5 wt%, respectively based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like, in a form of (or provide) a metal powder or a metal fiber; a conductive polymer such as a polyphenylene derivative; and/or a mixture thereof.

Al may be utilized as the current collector, but the present disclosure is not limited thereto.

### Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon and/or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a combination thereof). The Sn-based negative electrode active material may include Sn, SnO₂, SnOₓ (0 < x < 2), a Sn-based alloy, and/or a combination thereof.

The silicon-carbon composite may be a composite of silicon and amorphous carbon. According to one or more embodiments, the silicon-carbon composite may be in a form of (or provide) silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be utilized in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles well to each other and also to attach the negative electrode active material well to the current collector. The binder may include a non-aqueous binder, an aqueous binder, a dry binder, and/or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

If an aqueous binder is utilized as the negative electrode binder, it may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of (or provide) a metal powder or a metal fiber; a conductive polymer such as a polyphenylene derivative; and/or a mixture thereof.

The negative electrode current collector may include one selected from among a copper foil, a nickel foil, a stainless steel foil, a titanium foil, a nickel foam, a copper foam, a polymer substrate coated with a conductive metal, and/or a combination thereof, but the present disclosure is not limited thereto.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a combination thereof on one or both surfaces (e.g., opposite surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a combination thereof, but the present disclosure is not limited thereto.

The organic material and the inorganic material may be mixed in one coating layer, or a coating layer including an organic material and a coating layer including an inorganic material may be stacked.

### Rechargeable Lithium Battery

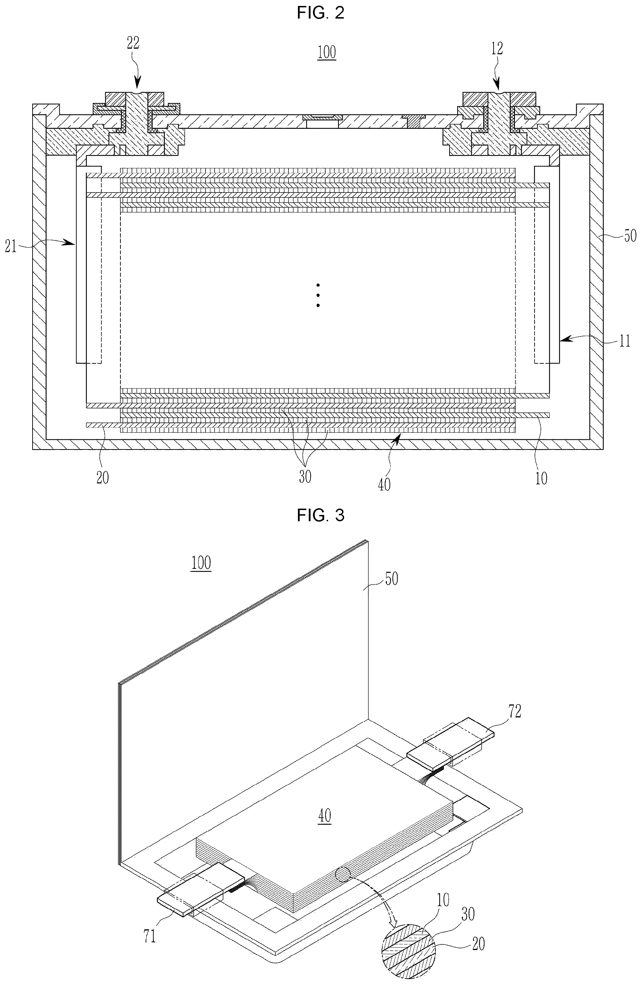

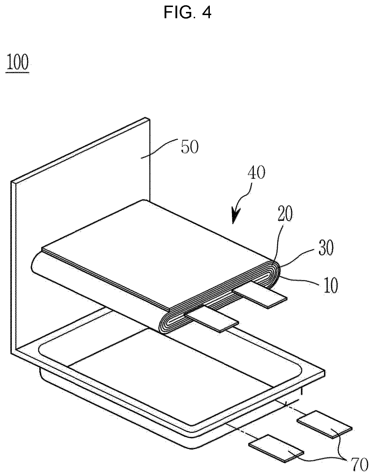

The rechargeable lithium battery may be classified into cylindrical, prismatic, pouch, or coin-type or kind batteries, and/or the like depending on their shape. FIGs. 1 to 4 are schematic views illustrating rechargeable lithium batteries according to one or more embodiments. FIG. 1 shows a cylindrical battery, FIG. 2 shows a prismatic battery, and FIGs. 3 and 4 show pouch-type or kind batteries. Referring to FIGs. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIG. 3, the rechargeable lithium battery 100 may include a positive electrode tab 71 and a negative electrode tab 72 serving as an electrical path for inducing the current formed in the electrode assembly 40 to the outside. As shown in FIG. 4, the rechargeable lithium battery 100 may include an electrode tabs 70 serving as an electrical path for inducing the current formed in the electrode assembly 40 to the outside.

The rechargeable lithium battery according to one or more embodiments may be applied to automobiles, mobile phones, and/or one or more suitable types (kinds) of electrical devices, but disclosure is not limited thereto.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, examples of the present disclosure and comparative examples are described. These examples, however, are not in any sense to be interpreted as limiting the scope of the present disclosure.

### EXAMPLES

### Examples and Comparative Examples

### Electrolytes and rechargeable lithium battery cells were prepared as follows.

### Example 1

### (1) Preparation of Electrolyte

1.3 M LiPF₆ was dissolved in a non-aqueous organic solvent in which ethylene carbonate (EC), propylene carbonate (PC), ethyl propionate (EP), and propyl propionate (PP) were mixed in a volume ratio of 10:15:30:45, and 10 wt% of the first additive and 1 wt% of the second additive were added thereto to prepare an electrolyte.

The first additive represented by Chemical Formula 1-1-1 was utilized, and the second additive represented by Chemical Formula 2-1-1 was utilized:

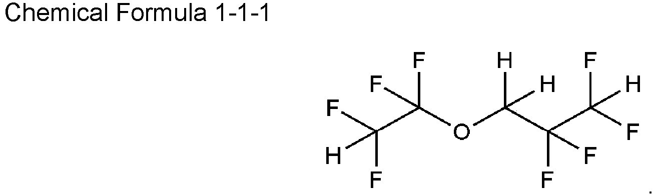

1,1,2,2-Tetrafluoroethyl2,2,3,3-tetrafluoropropylether (CAS No.: 16627-68-2)

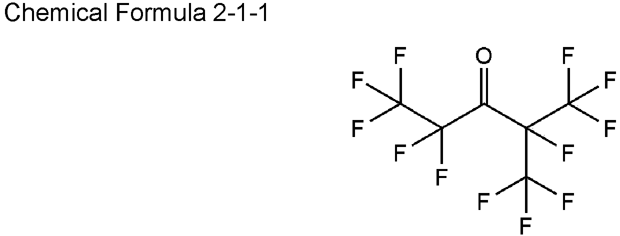

Perfluoro (2-methyl-3-pentanone) (CAS No.: 756-13-8)

### (2) Manufacture of Rechargeable Lithium Battery Cells

LiCoO₂ as a positive electrode active material, polyvinylidene fluoride as a binder, and acetylene black as a conductive material were mixed respectively in a weight ratio of 96:3:1, and then, dispersed in N-methyl pyrrolidone to prepare positive electrode active material slurry.

The positive electrode active material slurry was coated on a 15 micrometer (µm)-thick Al foil, dried at 100 °C, and pressed to manufacture a positive electrode.

Artificial graphite as a negative electrode active material, a styrene-butadiene rubber binder, and carboxylmethyl cellulose in a weight ratio of 98:1:1 were dispersed in distilled water to prepare negative electrode active material slurry.

The negative electrode active material slurry was coated on a 10 µm-thick Cu foil, dried at 100 °C, and pressed to manufacture a negative electrode. Accordingly, an active mass density of the negative electrode was set to 1.7 gram per cubic centimeter (g/cc).

An electrode assembly was manufactured by assembling the positive electrode, the negative electrode, and a separator made of polyethylene with a thickness of 10 µm, and the electrolyte was injected, to manufacture a rechargeable lithium battery cell.

### Example 2

An electrolyte and a rechargeable lithium battery cell were prepared in substantially the same manner as in Example 1, except that 10 wt% of the first additive and 2 wt% of the second additive were added to prepare the electrolyte.

### Example 3

An electrolyte and a rechargeable lithium battery cell were prepared in substantially the same manner as in Example 1, except that 10 wt% of the first additive and 5 wt% of the second additive were added to prepare the electrolyte.

### Example 4

An electrolyte and a rechargeable lithium battery cell were prepared in substantially the same manner as in Example 1, except that 10 wt% of the first additive and 2 wt% of the second additive were added to prepare the electrolyte and an active mass density was set to 1.75 g/cc to prepare the negative electrode.

### Example 5

An electrolyte and a rechargeable lithium battery cell were prepared in substantially the same manner as in Example 1, except that 10 wt% of the first additive and 2 wt% of the second additive were added to prepare the electrolyte and an active mass density was set to 1.8 g/cc to prepare the negative electrode.

### Comparative Example 1

An electrolyte and a rechargeable lithium battery cell were prepared in substantially the same manner as in Example 1, except that no additives were added to prepare the electrolyte and an active mass density was set to 1.65 g/cc to prepare the negative electrode.

### Comparative Example 2

An electrolyte and a rechargeable lithium battery cell were prepared in substantially the same manner as in Example 1, except that no additives were added to prepare the electrolyte and an active mass density was set to 1.67 g/cc to prepare the negative electrode.

### Comparative Example 3

An electrolyte and a rechargeable lithium battery cell were prepared in substantially the same manner as in Example 1, except that no additives were added to prepare the electrolyte and an active mass density was set to 1.7 g/cc to prepare the negative electrode.

### Comparative Example 4

An electrolyte and a rechargeable lithium battery cell were prepared in substantially the same manner as in Example 1, except that 15 wt% of the first additive was added to prepare the electrolyte and an active mass density was set to 1.7 g/cc to prepare the negative electrode.

### Comparative Example 5

An electrolyte and a rechargeable lithium battery cell were prepared in substantially the same manner as in Example 1, except that 10wt% of the second additive was added when to prepare the electrolyte and an active mass density was set to 1.7 g/cc to prepare the negative electrode.

### Evaluation Examples

The negative electrode and rechargeable lithium battery cell were evaluated in the following manner.

### Evaluation 1: Impregnating Property of Electrolyte for Negative Electrode

The negative electrode according to Example 1 was manufactured as a specimen with width*length = 3 cm*5 cm. 1 g of the electrolyte according to Example 1 was dropped on the specimen and allowed to stand for 20 minutes. Thereafter, an amount of electrolyte immersed in the specimen among 100 wt% of the electrolyte dropped on the specimen was evaluated as a value from 0 to 5 according to the following criteria, and the evaluation results are shown in Table 1.

0: If the amount of electrolyte immersed in the specimen is 0 wt% or more and less than 10 wt%

1: If the amount of electrolyte immersed in the specimen is 10 wt% or more and less than 20 wt%

2: If the amount of electrolyte immersed in the specimen is 20 wt% or more and less than 40 wt%

3: If the amount of electrolyte immersed in the specimen is 40 wt% or more and less than 60 wt%

4: If the amount of electrolyte immersed in the specimen is 60 wt% or more and less than 80 wt%

5: If the amount of electrolyte immersed in the specimen is 80 wt% or more and less than 100 wt%

Examples 2 to 5 and Comparative Examples 1 to 5 were evaluated in substantially the same manner, and the evaluation results are shown in Table 1.

**Table 1**

| | Active mass density of negative electrode (g/cc) | Additive content in electrolyte (wt%) | | Impregnating properties of electrolyte for negative electrode |
|---|---|---|---|---|
| | | First additive | Second additive | |
| Comparative Example 1 | 1.65 | 0 | 0 | 5 |
| Comparative Example 2 | 1.67 | 0 | 0 | 4 |
| Comparative Example 3 | 1.7 | 0 | 0 | 3 |
| Comparative Example 4 | 1.7 | 15 | 0 | 2 |
| Comparative Example 5 | 1.7 | 0 | 10 | 2 |
| Example 1 | 1.7 | 10 | 1 | 4 |
| Example 2 | 1.7 | 10 | 2 | 5 |
| Example 3 | 1.7 | 10 | 5 | 5 |
| Example 4 | 1.75 | 10 | 2 | 3 |
| Example 5 | 1.8 | 10 | 2 | 2 |

### Evaluation 2: Evaluation of Room-temperature Charge and Discharge Cycle Characteristics

The rechargeable lithium battery cells were charged and discharged 400 times under the conditions of 25 °C, 2.0 C charge (CC/CV, 4.53 V, 0.025 C Cut-off)/1.0 C discharge (CC, 3V Cut-off).

The thickness increase rates were calculated according to Equation 1, capacity retention rates were calculated according to Equation 2, and the results are shown in Table 2. Thickness increase rate = {(Full charge thickness after 400 cycles) - (Full charge thickness after 1 cycle)}/(Full charge thickness after 1 cycle) * 100

In Equation 1, "full charge thickness" refers to a thickness of the rechargeable lithium battery cells measured after charging at SOC 100% (if the total charge capacity of the battery is set at 100%, charged to 100% charge capacity) after each cycle. Capacity retention rate = (discharge capacity after 400 cycles /discharge capacity after 1 cycle) * 100

**Table 2**

| | Active mass density of negative electrode (g/cc) | Additive content in electrolyte (wt%) | | Room-temperature charge and discharge characteristics of rechargeable lithium battery cells | |
|---|---|---|---|---|---|
| | | First additive | Second additive | Thickness increase rate (%) | Capacity retention rate (%) |
| Comparative Example 1 | 1.65 | 0 | 0 | 13.0 | 81.6 |
| Comparative Example 2 | 1.67 | 0 | 0 | 13.2 | 81.4 |
| Comparative Example 3 | 1.7 | 0 | 0 | 17.3 | 76.7 |
| Comparative Example 4 | 1.7 | 15 | 0 | 55.8 | 0 |
| Comparative Example 5 | 1.7 | 0 | 10 | 53.0 | 0 |
| Example 1 | 1.7 | 10 | 1 | 11.2 | 85.2 |
| Example 2 | 1.7 | 10 | 2 | 8.6 | 87.3 |
| Example 3 | 1.7 | 10 | 5 | 9.8 | 86.1 |
| Example 4 | 1.75 | 10 | 2 | 11.8 | 85.5 |
| Example 5 | 1.8 | 10 | 2 | 12.9 | 83.3 |

### Summary

Referring to Tables 1 and 2, if utilizing an electrolyte including no additives (e.g., at all) (Comparative Examples 1 to 3), the active mass density of a negative electrode was increased to a value of from 1.65 g/cc to 1.7 g/cc, the impregnation properties of the electrolyte to the negative electrode were decreased, thicknesses of battery cells were increased, and the cycle-life of each of the battery cells was reduced.

However, if the active mass density of the negative electrode was equally set at 1.7 g/cc, compared to an electrolyte including no additives (e.g., at all) (Comparative Example 3), the electrolytes including the additives (Examples 1 to 3) exhibited increased impregnation properties of the electrolytes to the negative electrodes, decreased thicknesses of battery cells, and increased cycle-life.

In contrast, utilization of an electrolyte including just one of the first and second additives (Comparative Examples 4 and 5) each unstably formed a solid electrolyte interface (SEI) film on the negative electrode surface causing the growth of lithium dendrites and, as a result, sharply deteriorating the capacity retention rate during charge and discharge. Accordingly, it is shown that it would be highly desirable or necessary to utilize the electrolyte concurrently (e.g., simultaneously) including the first and second additives.

Furthermore, in the electrolyte concurrently (e.g., simultaneously) including the first and second additives, even though the active mass density of a negative electrode was increased from 1.7 g/cc to 1.8 g/cc (Examples 4 and 5), the electrolyte still suppressed or reduced an increase in a battery thickness and a decrease in a cycle-life.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A rechargeable lithium battery (100) comprising:
a positive electrode (10) comprising a positive electrode active material;
a negative electrode (20) comprising a negative electrode active material; and
an electrolyte,
wherein
an active mass density of the negative electrode is greater than or equal to 1.7 gram per cubic centimeter (g/cc), and
the electrolyte comprises:
a lithium salt;
a non-aqueous organic solvent;
a first additive represented by Chemical Formula 1; and
a second additive represented by Chemical Formula 2:
Chemical Formula 1 R¹-O-R²
in Chemical Formula 1,
R¹ and R² are each independently a fluorine atom or a C1 to C10 fluoroalkyl group; 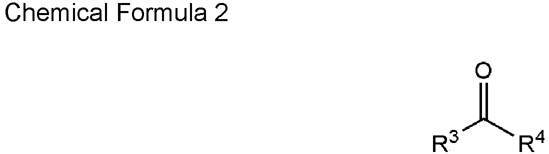
in Chemical Formula 2,
R³ and R⁴ are each independently a fluorine atom or a C1 to C10 fluoroalkyl group.

2. The rechargeable lithium battery (100) as claimed in claim 1, wherein
the first additive is represented by Chemical Formula 1-1: 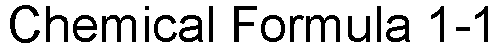 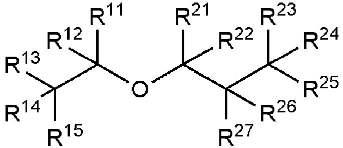 in Chemical Formula 1-1,
R¹¹ to R¹⁵ are each a hydrogen atom or a fluorine atom, and at least one selected from among R¹¹ to R¹⁵ is a fluorine atom; and
R²¹ to R²⁷ are each a hydrogen atom or a fluorine atom, and at least one selected from among R²¹ to R²⁷ is a fluorine atom.

3. The rechargeable lithium battery (100) as claimed in claim 1, wherein
the first additive is represented by Chemical Formula 1-1-1:

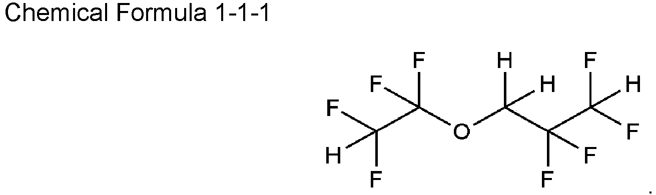

4. The rechargeable lithium battery (100) as claimed in any one of the preceding claims, wherein
the second additive is represented by Chemical Formula 2-1: 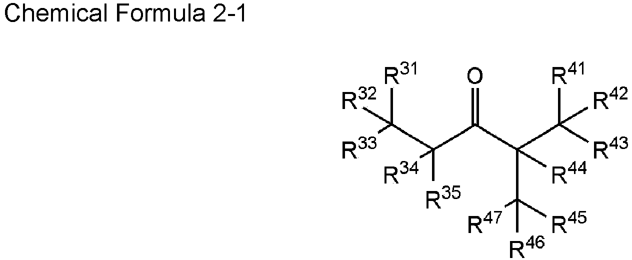 in Chemical Formula 2-1,
R³¹ to R³⁵ are each a hydrogen atom or a fluorine atom, and at least one selected from among R³¹ to R³⁵ is a fluorine atom; and
R⁴¹ to R⁴⁷ are each a hydrogen atom or a fluorine atom, and at least one selected from among R⁴¹ to R⁴⁷ is a fluorine atom.

5. The rechargeable lithium battery (100) as claimed in claim 4, wherein the second additive is represented by Chemical Formula 2-1-1:

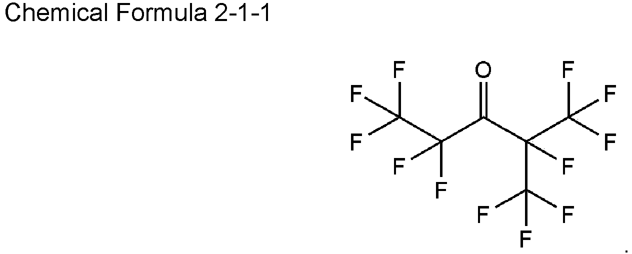

6. The rechargeable lithium battery (100) as claimed in any one of the preceding claims, wherein
the electrolyte comprises the first additive in an amount 1 to 20 wt% based on a total amount of the electrolyte; and/or
the electrolyte comprises the second additive in an amount 1 to 10 wt% based on a total amount of the electrolyte.

7. The rechargeable lithium battery (100) as claimed in any one of the preceding claims, wherein
a weight ratio of the first additive and the second additive is 20:1 to 2:1.

8. The rechargeable lithium battery (100) as claimed in any one of the preceding claims, wherein
the non-aqueous organic solvent comprises a carbonate-based solvent and a propionate-based solvent.

9. The rechargeable lithium battery (100) as claimed in claim 8, wherein
the non-aqueous organic solvent comprises the propionate-based solvent in an amount greater than or equal to 70 volume% based on a total amount of the non-aqueous organic solvent.

10. The rechargeable lithium battery (100) as claimed in any one of the preceding claims, wherein
the lithium salt is LiPF₆.

11. The rechargeable lithium battery (100) as claimed in any one of the preceding claims, wherein
a concentration of the lithium salt is 0.1 M to 2.0 M.

12. The rechargeable lithium battery (100) as claimed in any one of the preceding claims, wherein
the positive electrode active material comprises lithium nickel-based oxide, lithium cobalt-based oxide, lithium manganese-based oxide, a lithium iron phosphate-based compound, cobalt-free lithium nickel-manganese-based oxide, or a combination thereof.

13. The rechargeable lithium battery (100) as claimed in any one of the preceding claims, wherein
the negative electrode active material comprises a carbon-based negative electrode active material, a Si-based negative electrode active material, or a combination thereof.

14. The rechargeable lithium battery (100) as claimed in any one of the preceding claims, wherein
the active mass density of the negative electrode is 1.7 g/cc to 2.0 g/cc.

15. An electrolyte, the electrolyte for a rechargeable lithium battery, the electrolyte comprising:
a lithium salt;
a non-aqueous organic solvent;
a first additive represented by Chemical Formula 1; and
a second additive represented by Chemical Formula 2:
Chemical Formula 1 R¹-O-R²
in Chemical Formula 1,
R¹ and R² are each independently a fluorine atom or a C1 to C10 fluoroalkyl group; 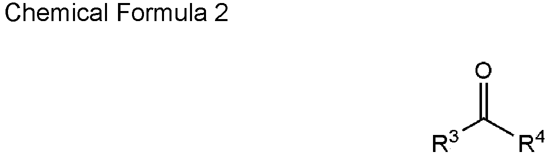
in Chemical Formula 2,
R³ and R⁴ are each independently a fluorine atom or a C1 to C10 fluoroalkyl group.
wherein the electrolyte is for a rechargeable lithium battery.
